# EUROPÄISCHE PATENTSCHRIFT

(11) **EP 1 197 724 B1**
(45) Veröffentlichungstag und Bekanntmachung des Hinweises auf die Patenterteilung: **21.05.2003**
(21) Anmeldenummer: 00122069.8
(22) Anmeldetag: 11.10.2000
(51) Int. Cl.: G01B 3/56, G01B 5/24

(54) **Fasenlängen-Messvorrichtung**
Apparatus for measuring chamfer length
Dispositif pour mésurer la longeur de chanfrein

(43) Veröffentlichungstag der Anmeldung: 17.04.2002
(73) Patentinhaber: Kappler, Hans-Peter, 77948 Friesenheim (DE)
(72) Erfinder: Kappler, Hans-Peter, 77948 Friesenheim (DE)
(74) Vertreter: Patent- und Rechtsanwaltssozietät, Maucher, Börjes & Kollegen

(56) Entgegenhaltungen:
- CH-A- 535 420
- DE-A- 4 015 576
- US-A- 3 116 560
- US-A- 5 410 818
- US-A- 5 714 686

## Beschreibung

Die Erfindung bezieht sich auf eine Vorrichtung zum Messen der Fasenlänge angefaster Werkstücke, mit einer Wegmessvorrichtung, und mit einem mit der Wegmessvorrichtung verbundenen Messtaster sowie mit einer Auflage und einem Schiebeanschlag für das Werkstück.

Zur Fasenlängenmessung sind bereits verschiedene Fasenmesslehren bekannt (CH 579 261 A5, CH 569 953 A5, FR 2 314 469 A1, DE 26 16 105 A1), die prinzipiell gleich aufgebaut sind und die einen verschiebbaren Messtaster mit einer Anschlagkante zur Anlage an der zu überprüfenden Werkstück-Fase haben. Der Messtaster ist als Schieber ausgebildet und es ist eine Messskala insbesondere in Verbindung mit einem Nonius zum Ablesen der von der Fasenhöhe abhängigen Verschiebung des Schiebers vorgesehen.

Die Fasenmesslehren sind als Handgeräte ausgebildet, die an das zu überprüfende Werkstück angelegt werden. Es ist dazu erforderlich, sowohl das Werkstück als auch das Fasenmessgerät während der Messung relativ zueinander in einer definierten Position zu halten und dabei den Messtaster zu verschieben, bis er mit seiner als Messkante ausgebildeten Anschlagkante an der Fase anliegt. Obgleich Anlagen an der Messlehre für das Werkstück vorhanden sind, erfordert die Überprüfung eine große Geschicklichkeit und das Messergebnis ist von der exakten Relativlage zwischen Messlehre und Werkstück und damit von der manuellen Geschicklichkeit des Benutzers abhängig. Bei Einzelüberprüfungen an einem Werkstück können zwar mehrere Vergleichsmessungen durchgeführt werden, um das Ergebnis von Fehlmessungen zu eliminieren, jedoch ist dies bei Überprüfung von Serienteilen, wo nur kurze Zeit für einen Messvorgang zur Verfügung steht und darüber hinaus hohe Anforderungen an die Messgenauigkeit und Messsicherheit gestellt werden, nicht akzeptabel.

Aus der Gebranchsmusterschrift DE 7 201 833 eine Fasen-Fühllehre bekannt, die eine in der Winkelhalbierenden der angefasten Kante geführte, verschiebbare Zunge aufweist. Die Fühllehre hat Seitenteile mit zwei im Winkel der angefasten Kante verlaufenden Schenkeln, die an die Seitenflächen des bezüglich der Fase zu überprüfenden Bauteils angelegt werden. Mit der Stirnfläche der verschiebbaren Zunge kann durch Lichtspaltmessung der Fasenwinkel kontrolliert und über die Ausschublänge der Zunge wird die Höhe der Fase gemessen und über eine Umrechnungstabelle kann die Breite der Fase ermittelt werden. Auch diese Messung und insbesondere ein Umstellen auf andere Fasenwinkel ist umständlich.

Aus der DE 40 15 576 A1 und der Gebranchsmusterschrift G 90 10 830.2 (DE 9 010 830 U1) sind Fasenlängenmessgeräte bekannt, welche als Auflage einen oder zwei Auflagebolzen mit im Verlauf ihrer Längserstreckung vorgesehenen, im Durchmesser erweiterten Ansätzen aufweisen. Die Kante des Ansatzes bildet hierbei den Anschlag, an der die Fase in Messstellung anliegt. Bei sehr kleinen Fasen muss auch die Ansatzkante sehr klein und in ihrer Höhe insbesondere kleiner als die kleinste Fasenhöhe sein. Unterschreitet die Ansatzkante ein Mindestmaß, zum Beispiel ein Zehntel Millimeter, so ist sie im praktischen Gebrauch nur noch schwer oder nicht mehr deutlich fühlbar, wenn das angefaste Werkstück dagegen geschoben wird. Mit dem Fasenlängenmessgerät gemäß der Gebranchsmusterschrift G 90 10 830.2 sind nach dem gleichen Prinzip auch Innenfasen messbar.

Einschränkend ist hierbei, dass die Innenhöhlung des Werkstückes so groß sein muss, dass der als Auflage dienende Auflagebolzen hineinpasst. Dieser sollte deshalb einerseits möglichst dünn sein, andererseits aber wegen der Auflage des Werkstückes eine genügende Stabilität aufweisen.

Aufgabe der vorliegenden Erfindung ist es, eine Fasen-Messvorrichtung der eingangs erwähnten Art zu schaffen, mit der auch Fasen (Kantenbrüche, Kantenverkürzungen) mit Fasenlängen von weniger als einem Zehntel Millimeter exakt messbar sind und darüber hinaus sowohl Innen- als auch Außenfasen, insbesondere auch Innenfasen an Werkstücken mit sehr kleinen Innenhöhlungen. Außerdem soll die Vorrichtung einfach handhabbar sein.
Der Messvorgang soll nur kurze Zeit in Anspruch nehmen und das Messergebnis soll sofort und insbesondere auch direkt ablesbar zur Verfügung stehen.

Zur Lösung dieser Aufgabe wird erfindungsgemäß vorgeschlagen, dass der Schiebeanschlag im Längsverlauf der Auflage vorgesehen ist, an dem das Werkstück in Messstellung seitlich anliegt, dass der Messtaster stiftförmig mit einem den Schiebeanschlag bildenden, am Messtasterende befindlichen Anschlagzapfen und einem sich daran anschließenden Konusabschnitt ausgebildet ist, dass der Messtaster in Längsrichtung etwa rechtwinklig zur Auflage verschiebbar gelagert ist und in Messstellung sich mit seiner Übergangsstelle zwischen Anschlagzapfen und Konusabschnitt bei der Fasenkante des Werkstückes zwischen dessen Anschlagstirnseite und der Fasenfläche befindet.

Bei dieser Vorrichtung sind der Messtaster und die Auflage voneinander getrennte Teile, so dass sie auch entsprechend ihrer jeweiligen Aufgabe dimensioniert sein können. Auch relativ schwere, angefaste Werkstücke lassen sich so hinsichtlich der Fasenlänge überprüfen. Dabei können auch sehr kleine Anfasungen gemessen werden, da als Anschlag der am Ende des Messtasters befindliche Anschlagzapfen dient, an dem das Werkstück in Messstellung seitlich anliegt. Die Anschlagsicherheit ist dabei unabhängig von der Fasenlänge, so dass einerseits lange und andererseits auch sehr kurze Fasen bis hinab in den hunderstel Millimeterbereich gleiche Anschlagverhältnisse ergeben.

Schließlich ist der Messvorgang einfach und schnell durchführbar, insbesondere auch, weil das Werkstück auf der Auflage seitlich an den Messtaster bis zur seitlichen Anlage an dem Anschlagzapfen herangeschoben werden kann und dabei den Messtaster durch den vorgesehenen Konusabschnitt in Messendstellung auslenkt.
Diese mit praktisch einem Handgriff durchführbare Handhabung erfordert kein besonderes Fingerspitzengefühl, auch nicht bei kleinsten Anfasungen.

Vorzugsweise ist die Werkstück-Auflage durch eine ebene Platte gebildet, die für den Messtaster eine Durchtrittsöffnung aufweist, die vorzugsweise etwa mittig der Platte angeordnet ist.
Damit ist auch für schwere, zu überprüfende Werkstücke eine solide Auflage vorhanden und durch die etwa mittige Anordnung des Messtasters kann das Werkstück in beliebiger Richtung seitlich an den Messtaster herangeschoben werden, was die Handhabung vereinfacht.

Zweckmäßigerweise befindet sich der Konusabschnitt in Messbereitschaftsstellung beziehungsweise Ausgangslage mit seinem Konusfuß etwa in Verlängerung der Werkstück-Auflageebene. Die zu messende Fase trifft dadurch beim seitlichen Anlegen des Werkstücks an den Messtaster auf den Konusabschnitt, so dass mit diesem seitlichen Anlegen bis an den Anschlagzapfen gleichzeitig auch die Auslenkung des Messtasters, insbesondere nach unten erfolgt und damit der Messvorgang abgeschlossen ist.

Es besteht auch die Möglichkeit, dass der Messtaster oder ein starr damit verbundenes Element mit einem manuell betätigbaren Betätigungsteil zum Absenken des Messtasters gegen die Federkraft des Federparallelogramms oder dergleichen Rückstellelement verbunden ist. Durch diese Ausführungsform kann der Messtaster manuell in eine Messausgangsstellung gebracht werden. Insbesondere Fasen mit einigen Millimetern Fasenlänge lassen sich damit messen.

Prinzipiell lassen sich auch Fasen mit vom Konuswinkel abweichendem Fasenwinkel überprüfen. Es muss nur sichergestellt sein, dass die die Fasenlänge begrenzende Kante des Prüflings an dem Konusabschnitt zur Anlage kommt. Dies ist sowohl bei übereinstimmenden Fasen- und Konuswinkeln der Fall, als auch dann, wenn der Konuswinkel kleiner ist als der Fasenwinkel.

Vorteilhaft ist es, wenn der Anschlagzapfen konisch sich zur Übergangsstelle zwischen Anschlagzapfen und Konusabschnitt verjüngend ausgebildet ist. Durch den dadurch gebildeten Freiwinkel liegt das Werkstück in Anschlagstellung an einem Ringkantenbereich an, wodurch die Genauigkeit erhöht und eine hohe Schmutzunempfindlichkeit vorhanden ist.

Eine vorteilhafte Ausführungsform der Erfindung sieht vor, dass der Messtaster gegen eine in Richtung zu seinem freien, den Anschlagzapfen aufweisenden Ende wirkende Rückstellkraft verschiebbar gelagert ist, dass dazu ein Federparallelogramm vorgesehen ist, das mit seinem einen Ende beweglich mit der Werkstück-Auflage und mit seinem anderen Ende mit einem mit der Wegmessvorrichtung kuppelbaren Übertragungsteil beweglich verbunden ist, welches den Messtaster trägt.
Der Messtaster befindet sich durch die Rückstellkraft-Beaufschlagung ohne anliegendes Werkstück in Mess-Ausgangslange, in die er nach dem Messvorgang automatisch zurückfedert. Durch die Federparallelogrammführung ist eine hochpräzise Führung vorhanden, die verschmutzungsunempfindlich ist, da keine ineinandergreifenden, führungsgelagerten Teile vorhanden sind.

Die erfindungsgemäße Fasenlängen-Messvorrichtung kann auch gut zur Messung der Fasenlänge von zurückliegenden Fasen, zum Beispiel im Verlauf einer Welle an einer Nut befindliche Fasen, eingesetzt werden. Außerdem auch zur Messung von Ringnutfasen, die sich in einem radial zurückspringenden Wandabschnitt befinden. Dies kann bei Aufnahmenuten von Kolben für Kolbenringe der Fall sein. Der Messtaster wird dazu an den zurückspringenden Wandabschnitt mit seinem freien Ende angelegt und damit der Abstand zur Auflage erfasst. Die Rücksprungtiefe kann dann bei der Messung der Fasenlänge berücksichtigt werden.

Zweckmäßigerweise weist die Werkstück-Auflage eine in der Verlängerung ihrer Längsachse den Messtaster mittig schneidende Führung für runde, am Ende und/oder im Verlauf ihrer Längserstreckung angefaste Werkstücke auf.
Diese Werkstücke werden dadurch lagerichtig dem Messtaster zugeführt, so dass eine in Messendstellung sonst evtuell notwendige Rollbewegung zur Ermittlung des maximalen Messausschlages vermieden werden kann und dadurch auch eine schnellere Messfolge möglich ist. Gleichzeitig werden die Werkstücke gegen ein ungewolltes Wegrollen auf der Werkstück-Auflage fixiert.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine zum Teil im Schnitt gehaltene Seitenansicht einer erfindungsgemäßen Fasenlängen-Messvorrichtung,
- Fig. 2: eine um 90° gegenüber Fig. 1 gedrehte Seitenansicht der Fasenlängen-Messvorrichtung und
- Fig. 3: eine Detailansicht im Bereich eines an einem Werkstück anliegenden Messtasters.

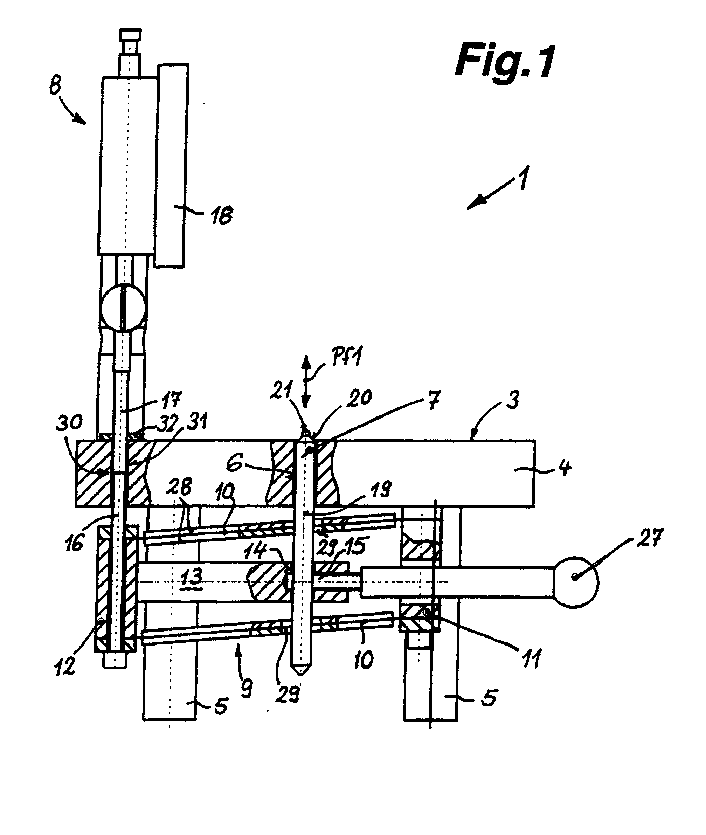

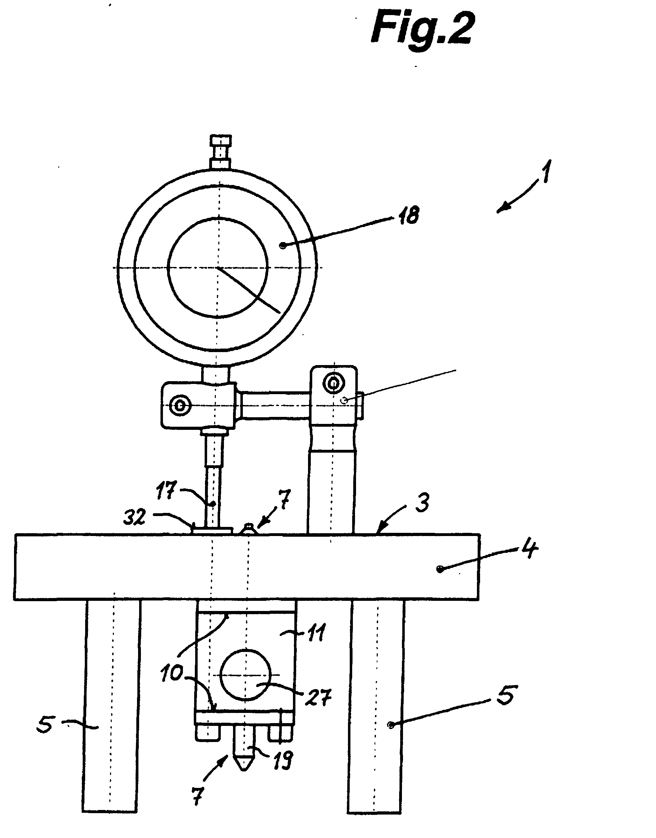

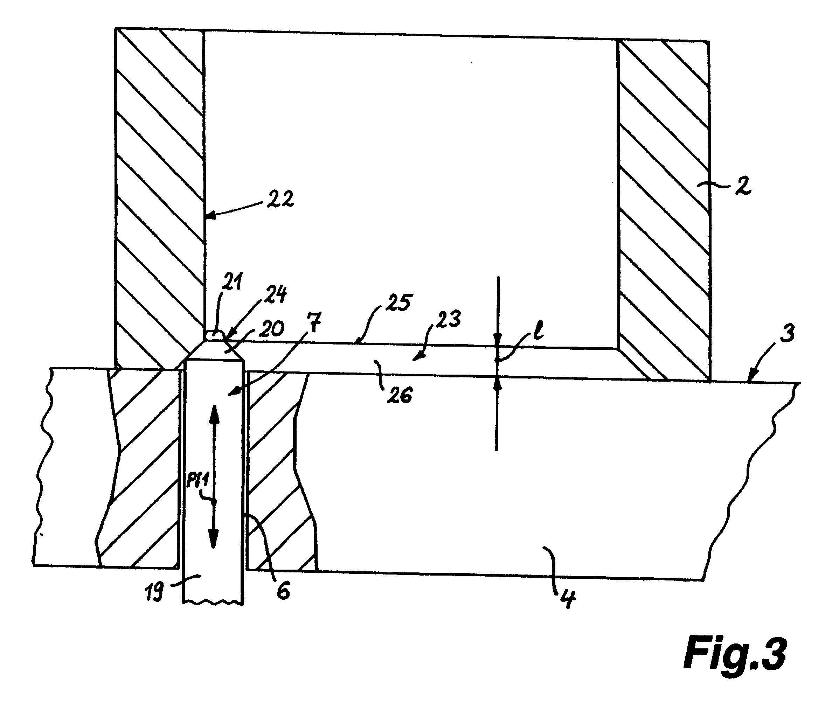

Eine in den Fig. 1 und 2 gezeigte Messvorrichtung 1 dient zum Messen der Fasenlänge angefaster Werkstücke 2 (vgl. Fig. 3).

Die Messvorrichtung 1 weist als Werkstück-Auflage 3 eine ebene Platte 4 auf, die unterseitig vier Standbeine 5 hat.
Die Platte 4 hat etwa mittig eine Durchtrittsöffnung 6 für einen stiftförmigen Messtaster 7. Dieser ist in axialer Richtung gemäß dem Doppelpfeil Pf1 in Fig. 1 und 3 verschiebbar gelagert. Zur Lagerung des Messtasters 7 und zur Übertragung seiner Axialbewegung auf eine Wegmessvorrichtung 8 ist eine Übertragungsmechanik vorgesehen, die im Ausführungsbeispiel ein Federparallelogramm 9 ... aufweist. Das Federparallelogramm ist unterhalb der Platte 4 angeordnet und weist zwei zueinander parallel angeordnete und zueinander beanstandete Blattfedern 10 auf, deren eine Enden an einem mit der Platte 4 verbundenen Trägerteil 11 und deren andere Enden mit einem Übertragungsteil 12 verbunden sind. An dem Übertragungsteil 12 ist ein Querträger 13 befestigt, der eine radial orientierte Aufnahmelochung 14 mit Klemmbefestigung 15 für den Meßtaster 7 aufweist. Durch die Parallelogrammführung ist der Meßtaster 7 exakt in axialer Richtung geführt und gleichzeitig in Richtung zu seinem freien Ende hin federkraftbeaufschlagt.

Die Axialbewegung des Meßtasters 7 und damit auch die des starr damit verbundenen Übertragungsteiles 12 wird über einen Übertragungsbolzen 16, der mit dem Übertragungsteil 12 verbunden ist, auf einen Meßuhrtaster 17 einer die Wegmeßvorrichtung 8 bildenden Meßuhr 18 übertragen.

Der stiftförmige Meßtaster 7 weist einen die Durchtrittsöffnung 6 in der Platte 4 durchsetzenden Schaftabschnitt 19 auf, der in seiner weiteren Verlängerung mit dem Querträger 13 verbunden ist. An den Schaftabschnitt 19 schließt sich nach oben ein Konusabschnitt 20 an, der sich zum oberen, freien Endbereich des Meßtasters 7 kegelstumpfförmig verjüngt und in einen Anschlagzapfen 21 übergeht.

In Fig. 1 und 2 ist der Meßtaster 7 so eingestellt, daß er in Ausgangslage mit seinem Konusfuß etwa in Verlängerung der Werkstück-Auflageebene liegt. Wird ein Werkstück 2 auf die Werkstück-Auflage 3 gelegt und seitlich gegen den Meßtaster 7 geschoben, so trifft das Werkstück mit seiner angefasten Kante auf den Konusabschnitt 20 und lenkt den Meßtaster 7 nach unten aus, bis die Stirnseite 22 (vgl. Fig. 3) des Werkstücks 2 seitlich an dem Anschlagzapfen 21 anliegt. Die Auslenkbewegung des Meßtasters 7 nach unten wird auf die Meßuhr 18 übertragen und ist ein Maß für die Fasenlänge 1 der an dem Werkstück 2 zu überprüfenden Fase 23 (vergleiche auch Fig.3).

In der Meßendlage, die in Fig. 3 gezeigt ist, befindet sich die Übergangsstelle 24 zwischen Anschlagzapfen 21 und Konusabschnitt 20 bei der Fasenkante 25 des Werkstückes 2 zwischen dessen Anschlagstirnseite 22 und der Fasenfläche 26.

Bei der Messung wird die Fasenlänge 1 erfasst, wobei der Fasenwinkel des Werkstückes 2 von untergeordneter Bedeutung ist. Es ist deshalb bevorzugt vorgesehen, daß der Konuswinkel des Konusabschnittes 20 geringfügig kleiner ist als der Fasenwinkel der Fase 23. Damit wird erreicht, daß die Fasenkante 25 zwischen der Stirnseite 22 und der Fasenfläche 26 an dem Konusabschnitt 20 zur Anlage kommt und zwischen der Fasenfläche 26 und dem Konusabschnitt 20 ein Freiwinkel verbleibt. Die Winkelabweichung kann wenige Grade, beispielsweise 3° betragen.

Bei einem Fasenwinkel von 45° kann somit der Konuswinkel des Konusabschnittes 20 des Meßtasters 7 beispielsweise 42° betragen.

Die Justierung der Meßvorrichtung kann mit Hilfe eines rechtwinkligen, scharfkantigen Teiles erfolgen, das anstatt eines Werkstückes mit Anfasung seitlich an den Meßtaster 7 geführt wird. Der Meßtaster 7 wird dabei maximal nach unten ausgelenkt, bis sich die auf der Werkstück-Auflage 3 aufliegende Kante des Justierteiles an der Übergangsstelle 24 zwischen Konusabschnitt 20 und Anschlagzapfen 21 befindet. Von dieser Nullstellung ausgehend ist die Fasenlänge 1 durch das Maß der Bewegung des Meßstasters 7 nach oben bestimmt. Je kleiner also die Auslenkung des Meßtasters 7 durch ein seitlich angelegtes, angefastes Werkstück erfolgt, je größer ist die Fasenlänge.

Bei sehr großen Fasenlängen, wie dies beispielsweise bei dem Werkstück 2 in Fig. 3 gezeigt ist, kann die Ausgangslage des Meßtasters 7 gegenüber der in Fig. 1 und 2 gezeigten Lage etwas weiter über die Werkstück-Auflage 3 vorstehend vorgesehen sein, um sicherzustellen, daß die Werkstück-Fasenkante 25 im Bereich des Konusabschnittes 20 auftrifft.

Andererseits besteht aber auch die Möglichkeit, den Meßtaster 7 mit Hilfe eines manuell betätigbaren Betätigungsteiles 27 soweit nach unten zu bewegen, daß der Konusabschnitt 20 etwa in Höhe der Fasenkante 25 des Werkstückes liegt, dann das Werkstück seitlich anzunähern, bis die Fasenkante 25 am Konusabschnitt 20 anliegt und durch weiteres Annähern des Werkstückes an den Meßtaster 7 bis zum Anschlagzapfen 21, den Meßtaster 7 in Meßendstellung zu bringen. In diesem Fall kann der Meßtaster 7 soweit in Ausgangslage über die Werkstück-Auflage 3 überstehen, daß sowohl sehr große Fasenlängen durch direktes seitliches Anlegen des Werkstückes an den Meßtaster 7 als auch kleine Fasenlängen durch vorheriges Absenken des Meßtasters 7 gemessen werden können.

Im Ausführungsbeispiel gemäß Fig. 1 und 2 ist das Betätigungsteil 27 in den Querträger 13 eingeschraubt und dient gleichzeitig auch als Klemmbefestigung 15 zum Festlegen des Meßtasters 7 in der Aufnahmelochung 14.

Der Anschlagzapfen 21 hat vorzugsweise eine von einem Zylinder abweichende Form, wobei vorzugsweise eine Kegelstumpfform mit sich zur Übergangsstelle 24 zwischen dem Anschlagzapfen 21 und dem Konusabschnitt 20 konisch verjüngendem Kegelmantel vorgesehen ist. Die Stirnseite 22 eines hinsichtlich seiner Anfasung zu messenden Werkstückes liegt dadurch im Bereich einer umlaufenden Linie an dem Anschlagzapfen 21 an. Dadurch ergibt sich eine verringerte Schmutzempfindlichkeit und erhöhte Präzision bei der Messung. Insbesondere bei Anfasungen, deren Fasenlängen im hundertstel Millimeterbereich liegen, macht sich dies vorteilhaft bemerkbar.

Der Durchmesser des Anschlagzapfens 21 ist so bemessen, daß einerseits eine genügende Stabilität für das Anlegen eines Werkstückes vorhanden ist, andererseits aber auch Innenfasen gemessen werden können, die sich zum Beispiel am Rand einer Bohrung befinden, in die der Anschlagzapfen dann hineinpassen muß.

In Fig. 1 ist noch gut erkennbar, daß die Blattfedern 10 des Federparallelogramms 9 über ihren Längsverlauf jeweils beabstandet zu ihren endigen Einspannstellen durch sie flachseitig beaufschlagende Stabilisierplatten 28, verformungsstabilisiert sind. Die elastische Verformung der Blattfedern 10 erfolgt somit in den Bereichen zwischen den Einspannstellen und den Stabilisierplatten 28. Für den Durchtritt des Meßtasters 7 weisen die Blattfedern 10 mit Stabilisierplatten 28 jeweils Öffnungen 29 auf.

Gut zu erkennen ist in Fig. 1 auch, daß die Übertragungsstelle 30 zwischen dem Meßuhrtaster 17 und dem mit dem Federparallelogramm 9 verbundenen Übertragungsbolzen 16 innerhalb der eine Bohrung 31 aufweisenden Platte 4 angeordnet ist. Die aufeinanderliegenden Kontaktflächen zwischen dem Meßuhrtaster 17 und dem Übertragungsbolzen 16 sind somit gut geschützt und weitgehend verschmutzungsunzugänglich angeordnet. Am oberen Ende der Bohrung 31 ist noch ein Dichtring 32 vorgesehen, um ein Eindringen von Schmutzpartikeln in die Bohrung 31 zu verhindern.

Erwähnt sei noch, daß im Übertragungsweg zwischen dem Meßtaster 7 und der insbesondere durch eine Meßuhr 18 gebildeten Wegmeßvorrichtung, eine Längenverstellvorrichtung zur Einstellung auf unterschiedliche Fasenwinkel vorgesehen sein kann.

## Patentansprüche

1. Vorrichtung (1) zum Messen der Fasenlänge angefaster Werkstücke, mit einer Wegmessvorrichtung (8) und mit einem mit der Wegmessvorrichtung (8) verbundenen Messtaster (7) sowie mit einer Auflage (3) und einem Schiebeanschlag für das Werkstück (2), **dadurch gekennzeichnet, dass** der Schiebeanschlag im Längsverlauf der Auflage vorgesehen ist, an dem das Werkstück (2) in Messstellung seitlich anliegt, dass der Messtaster (7) stiftförmig mit einem den Schiebeanschlag bildenden, am Messtasterende befindlichen Anschlagzapfen (21) und einem sich daran anschließenden Konusabschnitt (20) ausgebildet ist, dass der Messtaster (7) in Längsrichtung etwa rechtwinklig zur Auflage (3) verschiebbar gelagert ist und in Messstellung sich mit seiner Übergangsstelle (24) zwischen Anschlagzapfen (21) und Konusabschnitt (20) bei der Fasenkante (25) des Werkstückes (2) zwischen dessen Anschlagstirnseite (22) und der Fasenfläche (26) befindet.

2. Vorrichtung nach Anspruch 1, **dadurch gekennzeichnet, dass** die Werkstück-Auflage (3) durch eine ebene Platte (4) gebildet ist und dass diese für den Messtaster (7) eine Durchtrittsöffnung (6) aufweist, die vorzugsweise etwa mittig der Platte (4) angeordnet ist.

3. Vorrichtung nach Anspruch 1 oder 2, **dadurch gekennzeichnet, dass** sich der Konusabschnitt (20) in Messbereitschaftsstellung beziehungsweise Ausgangslage mit seinem Konusfuß etwa in Verlängerung der Werkstück-Auflagenebene (3) befindet.

4. Vorrichtung nach einem der Ansprüche 1 bis 3, **dadurch gekennzeichnet, dass** der Konusabschnitt (20) einen etwa dem Fasenwinkel entsprechenden Konuswinkel aufweist und dass dieser Konusabschnitt (20) vorzugsweise etwas kleiner als der Fasenwinkel ist.

5. Vorrichtung nach einem der Ansprüche 1 bis 4, **dadurch gekennzeichnet, dass** der Konuswinkel des Konusabschnittes (20) des Messtaster (7) etwa 45° beträgt.

6. Vorrichtung nach einem der Ansprüche 1 bis 5, **dadurch gekennzeichnet, dass** der Anschlagzapfen (21) konisch sich zur Übergangsstelle zwischen Anschlagzapfen (21) und Konusabschnitt (20) verjüngend ausgebildet ist.

7. Vorrichtung nach einem der Ansprüche 1 bis 6, **dadurch gekennzeichnet, dass** der Durchmesser des Anschlagzapfens (21) zur Messung von Innenfasen kleiner als der Durchmesser des kleinsten zu messenden, angefasten Loches ist.

8. Vorrichtung nach einem der Ansprüche 1 bis 7, **dadurch gekennzeichnet, dass** der Messtaster (7) gegen eine in Richtung zu seinem freien, den Anschlagzapfen (21) aufweisenden Ende wirkende Rückstellkraft verschiebbar gelagert ist, dass dazu ein Federparallelogramm (9) vorgesehen ist, das mit seinem einen Ende beweglich mit der Werkstück-Auflage (3) und mit seinem anderen Ende mit einem mit der Wegmessvorrichtung (8) kuppelbaren Übertragungsteil (12) beweglich verbunden ist, welches den Messtaster (7) trägt.

9. Vorrichtung nach Anspruch 8, **dadurch gekennzeichnet, dass** das zur Lagerung des Messtasters (7) vorgesehene Federparallelogramm (9) unterhalb der auf vorzugsweise durch vier Standbeine (5) gebildeten Abstandhaltern gelagerten Werkstück-Auflage (3) angeordnet ist.

10. Vorrichtung nach Anspruch 8 oder 9, **dadurch gekennzeichnet, dass** das Federparallelogramm (9) zwei zueinander parallel angeordnete und zueinander beabstandete Blattfedern (10) aufweist, deren eine Enden an einem mit der Werkstück-Auflage (3) verbundenen Trägerteil (11) und mit ihren anderen Enden mit dem Übertragungsteil (12) verbunden sind.

11. Vorrichtung nach Anspruch 10, **dadurch gekennzeichnet, dass** die Blattfedern (10) über ihren Längsverlauf jeweils beabstandet zu ihren endigen Einspannstellen verformungsstabilisiert sind, vorzugsweise durch sie flachseitig beaufschlagene Stabilisierplatten (28).

12. Vorrichtung nach einem der Ansprüche 8 bis 11, **dadurch gekennzeichnet, dass** der Messtaster (7) an einem starr mit dem Übertragungsteil (12) verbundenen Querträger (13) gehalten ist, der vorzugsweise zwischen den Blattfedern (10) angeordnet ist, und dass dieser Querträger eine radial orientierte Aufnahmelochung (14) mit Klemmbefestigung (15) für den Messtaster (7) aufweist.

13. Vorrichtung nach einem der Ansprüche 8 bis 12, **dadurch gekennzeichnet, dass** der Messtaster (7) oder ein starr damit verbundenes Element mit einem manuell betätigbaren Betätigungsteil (27) zum Absenken des Messtasters (7) gegen die Federkraft des Federparallelogramms (9) oder dergleichen Rückstellelement verbunden ist.

14. Vorrichtung nach einem der Ansprüche 1 bis 13, **dadurch gekennzeichnet, dass** als Wegmessvorrichtung (8) eine Messuhr (18) mit einem Messuhrtaster (17) vorgesehen ist.

15. Vorrichtung nach Anspruch 14, **dadurch gekennzeichnet, dass** eine Messbewegungs-Übertragungsstelle (30) zwischen dem Messuhrtaster (17) und einem mit dem Übertragungsteil (12) verbundenen Übertragungsbolzen (16) innerhalb der durch eine Platte (4) gebildeten, eine Durchtrittsöffnung (31) aufweisenden Werkstück-Auflage (3) liegt.

16. Vorrichtung nach einem der Ansprüche 1 bis 15, **dadurch gekennzeichnet, dass** die Werkstück-Auflage (3) eine in der Verlängerung ihrer Längsachse den Messtaster (7) mittig schneidende Führung für runde, am Ende und/oder im Verlauf ihrer Längserstreckung angefaste Werkstücke aufweist.

## Claims

1. Apparatus (1) for measuring the chamfer length of chamfered workpieces, said apparatus having a path measuring apparatus (8) and a measuring gauge (7), which is connected to the path measuring apparatus (8), as well as having a support (3) and a slidable stop member for the workpiece (2), **characterised in that** the slidable stop member is provided in the longitudinal course of the support, the workpiece (2) abutting laterally against said stop member in the measuring position, **in that** the measuring gauge (7) is provided, in a pen-like manner, with a stop pin (21) forming the slidable stop member and situated at the end of the measuring gauge, and with a conical portion (20) communicating with said pin, **in that** the measuring gauge (7) is mounted so as to be displaceable substantially at right angles to the support (3), when viewed with respect to the longitudinal direction, and, in the measuring position, is situated with its transition point (24) between the stop pin (21) and the conical portion (20) when the chamfer edge (25) of the workpiece (2) is located between the end face (22) of the stop member for said workpiece and the chamfer face (26).

2. Apparatus according to claim 1, **characterised in that** the workpiece support (3) is formed by a flat plate (4), and **in that** said plate has a through-aperture (6), which is preferably disposed substantially centrally of the plate (4), for the measuring gauge (7).

3. Apparatus according to claim 1 or 2, **characterised in that** the conical portion (20) is situated with its cone base substantially in the extension of the workpiece supporting plane (3) in the measuring standby position or respectively in the initial position.

4. Apparatus according to one of claims 1 to 3, **characterised in that** the conical portion (20) has a cone angle corresponding substantially to the chamfer angle, and **in that** this conical portion (20) is preferably somewhat smaller than the chamfer angle.

5. Apparatus according to one of claims 1 to 4, **characterised in that** the cone angle of the conical portion (20) of the measuring gauge (7) is substantially 45°.

6. Apparatus according to one of claims 1 to 5, **characterised in that** the stop pin (21) tapers conically towards the transition point between the stop pin (21) and the conical portion (20).

7. Apparatus according to one of claims 1 to 6, **characterised in that** the diameter of the stop pin (21) for measuring internal chamfers is smaller than the diameter of the smallest chamfered hole to be measured.

8. Apparatus according to one of claims 1 to 7, **characterised in that** the measuring gauge (7) is mounted so as to be displaceable in opposition to a restoring force, which acts in the direction towards its free end provided with the stop pin (21), **in that** a spring parallelogram (9) is provided for such purpose, which parallelogram is displaceably connected to the workpiece support (3) by means of one of its ends, and it is displaceably connected to a transmission member (12) by means of its other end, said transmission member being connectable to the path measuring apparatus (8) and carrying the measuring gauge (7).

9. Apparatus according to claim 8, **characterised in that** the spring parallelogram (9), which is provided for the mounting support of the measuring gauge (7), is disposed beneath the workpiece support (3) mounted on spacer members preferably formed by four supporting legs (5).

10. Apparatus according to claim 8 or 9, **characterised in that** the spring parallelogram (9) has two leaf springs (10), which are disposed parallel to each other and are spaced apart from each other, one of their ends being mounted on a support member (11), which is connected to the workpiece support (3), and their other ends being connected to the transmission member (12).

11. Apparatus according to claim 10, **characterised in that** the leaf springs (10) are each stabilised against deformation over their longitudinal course when they are spaced from their terminal clamping-in points, preferably by means of stabilising plates (28) which act on the flat sides of said springs.

12. Apparatus according to one of claims 8 to 11, **characterised in that** the measuring gauge (7) is retained on a transverse support (13), which is rigidly connected to the transmission member (12) and is disposed preferably between the leaf springs (10), and **in that** this transverse support has a radially orientated receiving bore (14) with a clamping means (15) for the measuring gauge (7).

13. Apparatus according to one of claims 8 to 12, **characterised in that** the measuring gauge (7), or a means which is rigidly connected thereto, is connected to a manually actuatable actuating member (27) for lowering the measuring gauge (7) in opposition to the resilient force of the spring parallelogram (9) or a similar restoring means.

14. Apparatus according to one of claims 1 to 13, **characterised in that** a dial (18), having a dial gauge (17), is provided as the path measuring apparatus (8).

15. Apparatus according to claim 14, **characterised in that** a measuring movement transmission point (30) lies between the dial gauge (17) and a transmission bolt (16), connected to the transmission member (12), internally of the workpiece support (3), which is formed by a plate (4) and has a through-aperture (31).

16. Apparatus according to one of claims 1 to 15 **characterised in that** the workpiece support (3) has a guide, which cuts the measuring gauge (7) centrally in the extension of the longitudinal axis of said support, for guiding round workpieces which have been chamfered on the end and/or in the course of their longitudinal extension.

## Revendications

1. Dispositif(1) pour mesurer la longueur de chanfrein de pièces chanfreinées, équipé d'un dispositif de mesure de déplacement (8) et d'un palpeur de mesure (7) relié au dispositif de mesure de déplacement (8) ainsi que d'un support (3) et d'une butée de coulissement pour la pièce (2), **caractérisé en ce que** la butée de coulissement est prévue dans l'étendue longitudinale du support, sur laquelle la pièce (2) vient s'appuyer sur le côté dans la position de mesure, **en ce que** le palpeur de mesure (7) est conçu en forme de broche avec un tenon de butée (21) formant la butée de coulissement et se trouvant sur l'extrémité du palpeur de mesure et avec une partie conique (20) s'y raccordant, **en ce que** le palpeur de mesure (7) est logé de façon à pouvoir coulisser dans le sens longitudinal à peu près perpendiculairement au support (3) et, dans la position de mesure, il se trouve avec son point de transition (24) entre tenon de butée (21) et partie conique (20), près de l'arête de chanfrein (25) de la pièce (2) entre son côté avant de butée (22) et la surface de chanfrein (26).

2. Dispositif selon la revendication 1, **caractérisé en ce que** le support de pièce (3) est formé par une plaque (4) plane et **en ce que** celle-ci présente pour le palpeur de mesure (7) un orifice de passage (6), qui est disposé de préférence à peu près au milieu de la plaque (4).

3. Dispositif selon la revendication 1 ou 2, **caractérisé en ce que** la partie conique (20) se trouve dans la position de préparation de mesure ou la position de départ avec son pied conique à peu près dans le prolongement du plan de support de pièce (3).

4. Dispositif selon l'une quelconque des revendications 1 à 3, **caractérisé en ce que** la partie conique (20) présente un angle de cône correspondant à peu près à l'angle de chanfrein et **en ce que** cette partie conique (20) est de préférence un peu plus petite que l'angle de chanfrein.

5. Dispositif selon l'une quelconque des revendications 1 à 4, **caractérisé en ce que** l'angle de cône de la partie conique (20) du palpeur de mesure (7) est d'environ 45 degrés.

6. Dispositif selon l'une quelconque des revendications 1 à 5, **caractérisé en ce que** le tenon de butée (21) est conçu en forme de cône en se rétrécissant vers le point de transition entre tenon de butée (21) et partie conique (20).

7. Dispositif selon l'une quelconque des revendications 1 à 6, **caractérisé en ce que** le diamètre du tenon de butée (21) pour la mesure de chanfreins intérieurs est inférieur au diamètre du plus petit trou chanfreiné à mesurer.

8. Dispositif selon l'une quelconque des revendications 1 à 7, **caractérisé en ce que** le palpeur de mesure (7) est logé de façon à pouvoir coulisser contre une force de rappel agissant dans le sens de son extrémité libre et présentant le tenon de butée (21), qu'il est prévu à cet effet un parallélogramme de ressort (9), qui est relié de façon mobile par l'une de ses extrémités au support de pièce (3) et par son autre extrémité à une partie de transmission (12) pouvant être couplée avec le dispositif de mesure de déplacement (8) et portant le palpeur de mesure (7).

9. Dispositif selon la revendication 8, **caractérisé en ce que** le parallélogramme de ressort (9), prévu pour le logement du palpeur de mesure (7), est disposé au-dessous du support de pièce (3) maintenu sur des écarteurs formés de préférence par quatre pieds verticaux (5).

10. Dispositif selon la revendication 8 ou 9, **caractérisé en ce que** le parallélogramme de ressort (9) présente deux ressorts à lames (10) disposés en parallèle et espacés l'un par rapport à l'autre, dont une extrémité est reliée à une partie support (11) reliée au support de pièce (3) et dont l'autre extrémité est reliée à la partie de transmission (12).

11. Dispositif selon la revendication 10, **caractérisé en ce que** les ressorts à lames (10) sont stabilisés au plan de la déformation sur leur étendue longitudinale respectivement à distance de leurs points de fixation côté extrémité, de préférence par des plaques de stabilisation (28) sollicitées côté plat par eux.

12. Dispositif selon l'une quelconque des revendications 8 à 11, **caractérisé en ce que** le palpeur de mesure (7) est maintenu sur une traverse (13) reliée de façon rigide à la partie de transmission (12) et disposée de préférence entre les ressorts à lames (10), et **en ce que** cette traverse présente une perforation de logement (14) orientée radialement avec fixation de blocage (15) pour le palpeur de mesure (7).

13. Dispositif selon l'une quelconque des revendications 8 à 12, **caractérisé en ce que** le palpeur de mesure (7) ou un élément relié à lui de façon rigide est relié à une partie de commande (27) pouvant être actionnée manuellement pour l'abaissement du palpeur de mesure (7) contre la force de ressort du parallélogramme de force (9) ou de d'un élément de rappel similaire.

14. Dispositif selon l'une quelconque des revendications 1 à 13, **caractérisé en ce qu'**un comparateur (18) avec un palpeur de comparateur (17) est prévu comme dispositif de mesure de déplacement (8).

15. Dispositif selon la revendication 14, **caractérisé en ce qu'**un point de transmission de déplacement de mesure (30) est disposé entre le palpeur de comparateur (17) et un boulon de transmission (16) relié à la partie de transmission (12) à l'intérieur du support de pièce (3) formé par une plaque (4) et présentant un orifice de passage (31).

16. Dispositif selon l'une quelconque des revendications 1 à 15, **caractérisé en ce que** le support de pièce (3) présente un guide coupant au centre le palpeur de mesure (7) dans le prolongement de son axe longitudinal pour des pièces rondes et chanfreinées sur l'extrémité et/ou dans la partie de son étendue longitudinale.
